# EUROPEAN PATENT SPECIFICATION

(11) **EP 4 504 556 B1**
(45) Date of publication and mention of the grant of the patent: **05.11.2025**
(21) Application number: 23735889.0
(22) Date of filing: 22.05.2023
(51) Int. Cl.: B60N 2/14

(54) **SWIVEL MECHANISM WITH DUAL FUNCTION BEARING PLATE**
DREHMECHANISMUS MIT HALTEPLATTE WELCHE EINE DOPPELFUNKTION BESITZT
MÉCANISME DE ROTATION AVEC PLAQUE DE SUPPORT À DOUBLE FONCTION

(30) Priority: 20.05.2022 US 202263344215 P
(43) Date of publication of application: 12.02.2025
(73) Proprietor: Magna Seating Inc., Aurora, Ontario L4G 7K1 (CA)
(72) Inventor: VETERE II, Louis, Commerce Township, MI 48382 (US)
(74) Representative: Witte, Weller und Partner Patentanwälte mbB Stuttgart
(86) International application number: PCT/US2023/023097
(87) International publication number: WO 2023/225397

(56) References cited:
- EP-A1- 3 925 822
- CN-A- 110 626 231
- CN-U- 216 331 577
- KR-A- 20040 051 941

## Description

### FIELD AND BACKGROUND OF THE INVENTION

The present invention relates to a seat assembly for use in an automotive vehicle. More particularly, the invention relates to a swivel mechanism for use on an automotive seat assembly configured to allow rotation of the seat assembly between forward-facing and rearward-facing positions.

### DESCRIPTION OF RELATED ART

Automotive vehicles typically include one or more seat assemblies having a seat cushion and a seat back for supporting a passenger above a vehicle floor. It is commonly known for certain seat assemblies to be pivotable between a forward-facing position and a rearward-facing position. It is also commonly known for certain seat assemblies to include a swivel mechanism operatively coupled between the seat cushion and a seat base and configured to allow rotation of the seat cushion between the forward-facing and rearward-facing positions.

The swivel mechanisms typically include an upper plate fixedly coupled to the seat cushion, a lower plate fixedly coupled to the seat base, and a swivel plate positioned axially between the upper and lower plates. In addition, certain swivel mechanisms typically include rollers, bearings, and/or sliding elements positioned between the upper and lower plates and the swivel plate to allow for smooth adjustment and effort in rotating the swivel mechanism. In certain swivel mechanisms, bumpers and/or wedges are also included within the swivel mechanism to improve mechanical stability in the locked position. In addition, local reinforcements, such as J-Hooks, are often added to the upper plate and/or the lower plate to improve the load-carrying capability of the swivel mechanism.

However, commonly known swivel mechanisms incorporated into seat assemblies may have unacceptable looseness in the axial direction, partially due to gaps between the rollers, beanngs, and/or sliding elements relative to the upper plate, lower plate, and the swivel plate. In addition, the J-Hooks typically have an undesirable material thickness and assembly cost required since the J-Hooks are circumferentially spaced apart around the swivel plate.

It is desirable, therefore, to reduce the looseness in the swivel mechanism in the axial direction without including wedges or bumpers into the swivel mechanism. In addition, it is desirable to reduce the material thickness of the J-Hooks and assembly cost of the swivel mechanism while providing sufficient peel strength in the axial direction.

EP 3 925 822 A1 discloses a rotation device for a vehicle seat, the device including a fixed disc, a lower ball assembly, a movable disc, an upper ball assembly, and a platen successively arranged from bottom to top. A first lower circular track is formed on the fixed disc, and a first upper circular track and a second lower circular track are formed on the movable disc. A second upper circular track is formed on the platen. A diameter of a first arcuate envelope line of the first lower circular track that is in contact with a lower ball and a diameter of a second arcuate envelope line of the first upper circular track that is in contact with the lower ball are both equal to a diameter of the lower ball.

CN 216331577 U discloses an electric turntable for an automobile seat, which comprises a chassis, a turntable, a pressure plate, an upper retainer, a lower retainer and an electric driving device, the pressure plate is fixedly connected with the chassis and is used for pressing the turntable on the chassis. The turntable is in running fit with the chassis through the lower retainer and in running fit with the pressure plate through an upper retainer.

### SUMMARY OF THE INVENTION

The invention provides a swivel mechanism for use in a seat assembly for an automotive vehicle with the features of claim 1, and a seat assembly with the features of claim 9.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a seat assembly including a swivel mechanism pivotally coupled to a seat cushion and a seat base, according to one embodiment of the present invention;
Figure 2 is exploded perspective view of the swivel mechanism of Figure 1;
Figure 3 is a cross-sectional view taken along line 3-3 of the swivel mechanism of Figure 1, according to one embodiment of the present invention;
Figure 4 is a cross-sectional view taken along line 3-3 of the swivel mechanism of Figure 1, according to another embodiment of the present invention; and
Figure 5 is a cross-sectional view of a portion of a known swivel mechanism for a seat assembly.

### DETAILED DESCRIPTION OF THE INVENTION

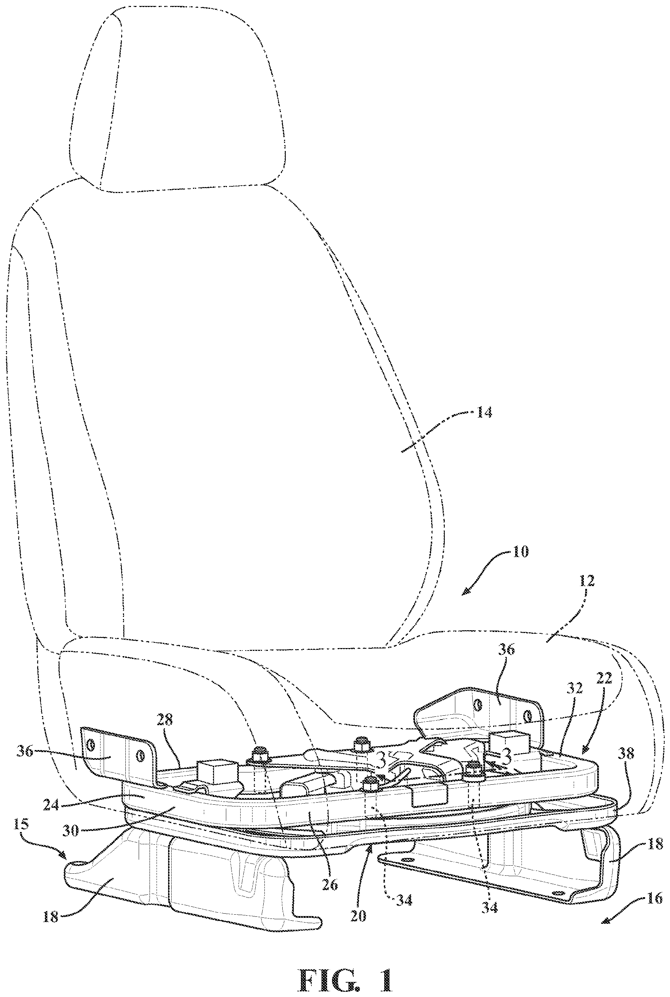

Figures 1-4 illustrate components of a seat assembly 10 for use in an automotive vehicle according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

Depicted in Figure 1, the seat assembly 10 includes a seat cushion 12, a seat back 14 pivotally coupled to the seat cushion 12, and a seat base 15 configured to support the seat assembly 10 above a vehicle floor 16. The seat base 15 may include a pair of laterally spaced apart riser brackets 18 directly fixedly coupled to the vehicle floor 16 or fixedly coupled to other components of the seat base 15, such as a sliding mechanism, a height adjustment mechanism, a tilt mechanism, and the like, without altering the scope of the present invention. In addition, the seat assembly 10 includes a swivel mechanism 20 pivotally coupling the seat cushion 12 to the seat base 15. The swivel mechanism 20 allows the seat cushion 12 to be selectively pivoted relative to the seat base 15 between a forward-facing position and a rearward-facing position.

Referring to Figure 1, the swivel mechanism 20 includes an upper structure 22 comprising a tubular frame 24 configured to support the seat cushion 12. The tubular frame 24 includes opposing front and rear portions 26, 28 extending between opposing inboard and outboard side portions 30, 32. A pair of laterally spaced apart bolt passageways 34 extend vertically through the front and rear portions 26, 28 of the tubular frame 24. It will be appreciated that the tubular frame 24 may be replaced by a plate, a bracket, and the like without altering the scope of the present invention. The swivel mechanism 20 also includes a pair of laterally spaced apart seat brackets 36 fixedly coupled to respective inboard and outboard side portions 30, 32 of the tubular frame 24 and fixedly coupled to the seat cushion 12.

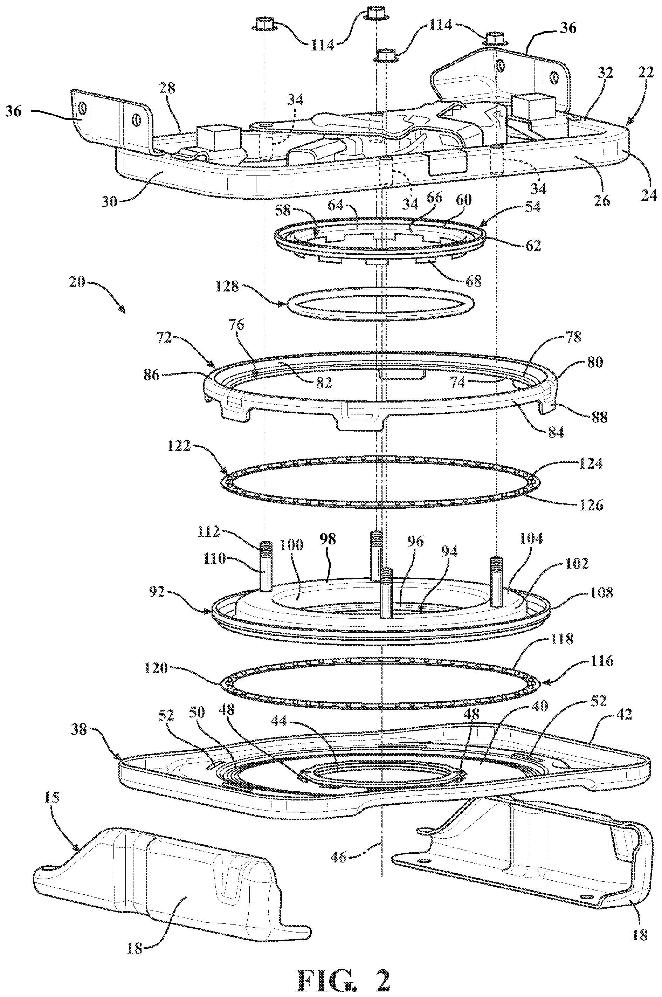

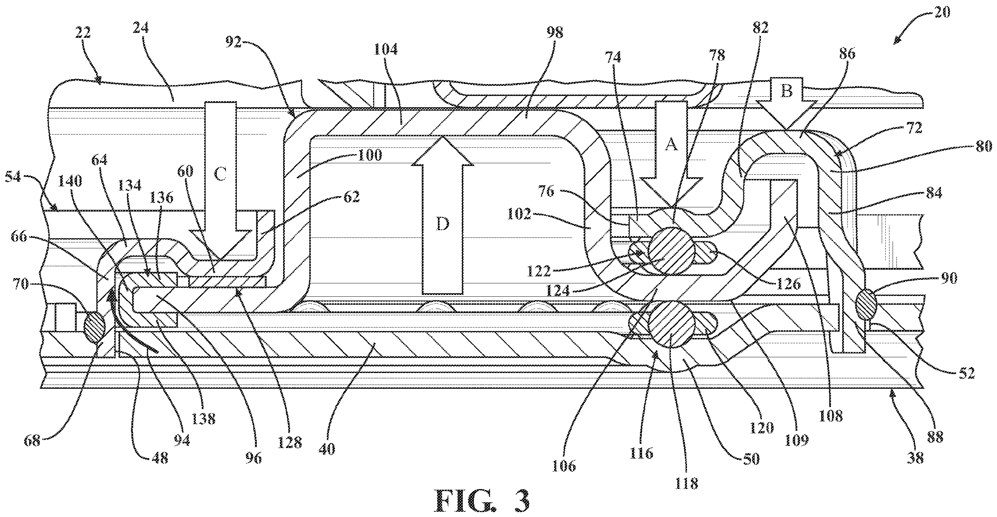

In addition, the swivel mechanism 20 includes a base plate 38 fixedly coupled to the seat base 15. In the embodiment shown in Figure 1, the base plate 38 is fixedly coupled to upper portions of the riser brackets 18. Referring to Figures 2 and 3, the base plate 38 includes a support plate 40 extending in a generally horizontal direction and a ledge 42 projecting at generally a right angle from an outer edge of the support plate 40. In addition, the base plate 38 includes a central hole 44 extending through the support plate 40 defining an axis of rotation 46 of the swivel mechanism 20. The base plate 38 also includes a plurality of spaced apart inner slots 48 extending axially therethrough and spaced circumferentially around and radially outward from the central hole 44. The base plate 38 also includes an upward facing base channel 50 extending in a circumferential direction around the axis of rotation 46 and spaced radially outward from the inner slots 48. The base channel 50 is configured to support and contain a rolling element, a sliding element, or the like, as further described below. Further, the base plate 38 includes a plurality of spaced apart outer slots 52 extending axially therethrough and spaced circumferentially around and radially outward of the base channel 50. As shown in Figure 2, the inner and outer slots 48, 52 are generally arcuate-shaped. It will be appreciated that the size, shape, number, and relative position of the inner and outer slots 48, 52 may vary without altering the scope of the present invention.

Depicted in Figures 2 and 3, the swivel mechanism 20 also includes a retaining ring 54 fixedly coupled to the base plate 38. The retaining ring 54 is generally ring-shaped with a central passageway 58 extending axially therethrough and defining a center axis of the retaining ring 54. The central passageway 58 has a longitudinal axis configured to generally align with the axis of rotation 46 of the swivel mechanism 20 when the retaining ring 54 is assembled with the base plate 38. The retaining ring 54 includes a ring portion 60 extending in a circumferential direction around the central passageway 58 and extending radially outward. The retaining ring 54 also includes an outer rim 62 extending upward from an outer edge of the ring portion 60. In addition, the retaining ring 54 includes a downward facing J-shaped channel 64 extending from an inner edge of the ring portion 60 with a leg portion 66 extending circumferentially around the central passageway 58. The retaining ring 54 further includes a plurality of circumferentially spaced apart inner tabs 68 extending in a downward axial direction from the leg portion 66 and configured to matingly engage with respective inner slots 48 in the base plate 38. During assembly, the inner tabs 68 are inserted into the respective inner slots 48 followed by one or more of the inner tabs 68 fixedly coupled to the base plate 38 by a weld 70. It will be appreciated that one or more of the inner tabs 68 may be fixedly coupled to the base plate 38 by a weld 70, a friction fit, a staking process, a mechanical fastener, or the like without altering the scope of the present invention.

The swivel mechanism 20 also includes a bearing plate 72 fixedly coupled to the base plate 38 and spaced radially apart from the retaining ring 54. The bearing plate 72 includes an inner ring 74 extending circumferentially around a center opening 76 in the bearing plate 72. The center opening 76 has a longitudinal axis configured to generally align with the axis of rotation 46 of the swivel mechanism 20 when the bearing plate 72 is assembled with the base plate 38. The inner diameter of the center opening 76 in the bearing plate 72 is preferably greater than the outer diameter of the outer rim 62 of the retaining ring 54. The bearing plate 72 includes a downward-facing upper channel 78 having an arcuate shape and extending generally radially outward from the inner ring 74. Further, the bearing plate 72 includes a downward-facing J-shaped channel 80 extending in a circumferential direction and having spaced apart inner and outer sides 82, 84 extending axially downward from a radial portion 86 with the inner side 82 of the J-shaped channel 80 extending upward from an outer edge of the upper channel 78. The bearing plate 72 also includes a plurality of circumferentially spaced apart outer tabs 88 extending in a downward axial direction from the outer side 84 of the J-shaped channel 80 and configured to matingly engage with respective outer slots 52 in the base plate 38. During assembly, the outer tabs 88 are inserted into the respective outer slots 52 and one or more of the outer tabs 88 are fixedly coupled to the base plate 38 by a weld 90. It will be appreciated that one or more of the outer tabs 88 may be fixedly coupled to the base plate 38 by a weld 90, a friction fit, a staking process, a mechanical fastener, or the like without altering the scope of the present invention.

Referring to Figures 2 and 3, the swivel mechanism 20 also includes a swivel plate 92 spaced axially between the retaining ring 54, the bearing plate 72, and the base plate 38. The swivel plate 92 is generally ring-shaped with a central aperture 94 extending axially therethrough and bounded by an inner flange 96 extending circumferentially around the central aperture 94. The central aperture 94 has a longitudinal axis configured to generally align with the axis of rotation 46 of the swivel mechanism 20 when the swivel plate 92 is assembled with the base plate 38. The swivel plate 92 also includes a downward-facing U-shaped channel 98 comprising spaced apart inner and outer walls 100, 102 extending downward from a radial wall 104 with the inner wall 100 extending upward from an outer edge of the inner flange 96. The inner wall 100 is configured such that the inner wall 100 is spaced radially outward from the outer rim 62 of the retaining ring 54 when the retaining ring 54 and the swivel plate 92 are assembled with the base plate 38. In addition, the outer wall 102 is configured such that the outer wall 102 is spaced radially inward from the inner ring 74 of the bearing plate 72 when the swivel plate 92 and the bearing plate 72 are assembled with the base plate 38. The swivel plate 92 also includes an outer ring 106 extending radially outward from a lower end of the outer wall 102 and an outer flange 108 projecting axially upward from the outer ring 106. The outer wall 102, the outer ring 106, and the outer flange 108 form an upward-facing C-shaped channel 109. The outer ring 106 is configured to be spaced axially between the base channel 50 in the base plate 38 and the upper channel 78 in the bearing plate 72 when assembled as part of the swivel mechanism 20. In addition, the outer flange 108 is configured to extend into the J-shaped channel 80 in the bearing plate 72 with the outer flange 108 being spaced radially between the inner and outer sides 82, 84 and spaced axially apart from the radial portion 86.

Shown in Figure 2, the swivel mechanism 20 includes a plurality of spaced apart shoulder bolts 110 corresponding to the number of bolt passageways 34 in the tubular frame 24. The shoulder bolts 110 include a lower end fixedly coupled to the swivel plate 92 and an upper threaded end 112 extending axially upward from the swivel plate 92. During assembly, the shoulder bolts 110 are inserted through the respective bolt passageways 34 in the tubular frame 24. Next, threaded nuts 114 are fixedly coupled to the threaded ends 112 of the shoulder bolts 110, fixedly coupling the swivel plate 92 to the tubular frame 24. It will be appreciated that the shoulder bolts 110 may include a shaft extending from a bolt head (not shown) and terminating at the upper threaded end 112 with the shaft inserted through holes in the swivel plate 92 and the bolt head abutting a lower side of the swivel plate 92 without altering the scope of the present invention.

Referring to Figures 2 and 3, the swivel mechanism 20 also includes a lower rolling element 116 assembled axially between the swivel plate 92 and the base plate 38 and configured to allow rotation of the swivel plate 92 relative to the base plate 38. The lower rolling element 116 is generally ring-shaped with a passageway extending axially therethrough. The lower rolling element 116 also comprises a plurality of spaced apart rollers 118 supported within a cage 120. During assembly, the lower rolling element 116 is inserted into the base channel 50 in the base plate 38 prior to assembly of the swivel plate 92 with the base plate 38. The base channel 50 in the base plate 38 and the lower surface of the outer ring 106 of the swivel plate 92 are configured as a lower race and an upper race, respectively, for the lower roller element 116. It will be appreciated that the lower rolling element 116 may be replaced by a lower sliding element (not shown), a ball bearing, a cylindrical bearing, a needle bearing, and the like, without altering the scope of the present invention.

In addition, the swivel mechanism 20 also includes an upper rolling element 122 assembled axially between the bearing plate 72 and the swivel plate 92 and configured to allow rotation of the swivel plate 92 relative to the bearing plate 72. The upper rolling element 122 is generally ring-shaped with a passageway extending axially therethrough. The upper rolling element 122 also comprises a plurality of spaced apart rollers 124 supported within a cage 126. During assembly, the upper rolling element 122 is inserted into the C-shaped channel 109 abutting an upper surface of the outer ring 106 in the swivel plate 92 prior to assembly of the bearing plate 72 with the base plate 38. After assembly, the upper rolling element 122 is spaced axially between the upper channel 78 in the bearing plate 72 and the outer ring 106 in the swivel plate 92. The upper surface of the outer ring 106 and the lower surface of the upper channel 78 are configured as a lower race and an upper race, respectively, for the upper roller element 122. It will be appreciated that the upper rolling element 122 may be replaced by an upper sliding element (not shown), a ball bearing, a cylindrical bearing, a needle bearing, and the like, without altering the scope of the present invention.

Depicted in Figures 2 and 3, the swivel mechanism 20 also includes a sliding element 128 assembled axially between the retaining ring 54 and the swivel plate 92 and configured to allow rotation of the swivel plate 92 relative to the retaining ring 54. The sliding element 128 is alternatively described as a central sliding element 128. In more detail, the sliding element 128 is generally disc-shaped with a passageway extending axially therethrough and formed out of a low friction material. Referring to Figure 3, the sliding element 128 is configured to face the lower surface of the ring portion 60 of the retaining ring 54 and face an upper surface of the inner flange 96 of the swivel plate 92.

Shown in Figure 3, the swivel mechanism 20 also includes a flange sliding element 134 assembled with the inner flange 96 of the swivel plate 92 and configured to allow rotation of the swivel plate 92 relative to the retaining ring 54 and the base plate 38. The flange sliding element 134 is generally ring-shaped with a passageway extending axially therethrough and formed out of a lower fiction material. In addition, the flange sliding element 134 includes spaced apart upper and lower flanges 136, 138 extending radially outward from a distal wall 140 such that the flange sliding element 134 has a generally U-shaped cross-section. During assembly, the inner flange 96 of the swivel plate 92 is inserted between the upper and lower flanges 136, 138 of the flange sliding element 134.

Referring to Figure 3, the swivel mechanism 20 includes a "net build" assembly function which reduces looseness in the Z-direction (i.e., the axial direction 46). To assemble the swivel mechanism 20, the lower rolling element 116 is inserted into the base channel 50 in the base plate 38. Next, the flange sliding element 134 is assembled with the inner flange 96 of the swivel plate 92. The swivel plate 92 is placed on the base plate 38 with the lower roller element 116 spaced between the base channel 50 in the base plate 38 and the lower surface of the outer ring 106. Next, the upper rolling element 122 is placed within the C-shaped channel 109 resting on the upper surface of the outer ring 106. In addition, the sliding element 128 is placed on the upper surface of the inner flange 96. After the upper rolling element 122 and the sliding element 128 are assembled with the swivel plate 92, the inner tabs 68 of the retaining ring 54 are inserted into the respective inner slots 48 in the base plate 38. Further, the outer tabs 88 of the bearing plate 72 are inserted into the respective outer slots 52 in the base plate 38. Loads are applied to the upper surface of the bearing plate 72 against the upper channel 78 and the radial portion 86, as illustrated by arrows A and B, and applied to the upper surface of the ring portion 60 of the retaining ring 54, as illustrated by arrow C prior to welding the bearing plate 72 and the retaining ring 54 to the base plate 38. In addition, the loads are applied (arrows A, B, and C) against the retaining ring 54 and the bearing plate 72 while the welds 70, 90 are formed to fixedly couple the retaining ring 54 and the bearing plate 72 to the base plate 38. The loads applied (arrows A, B, C) to the top of the bearing plate 72 and the retaining ring 54 during the welding process eliminate gaps in the rolling and sliding areas. The design of the retaining ring 54 and the bearing plate 72 allows for Z-direction net build and the elimination of looseness since the retaining ring 54 and the bearing plate 72 are configured so that loads (arrows A, B, C) may be applied during the welding process.

Also shown in Figure 3, the bearing plate 72 has a dual function. A first function of the bearing plate 72 is to support and contain the upper rolling element 122, the outer ring 106 of the swivel plate 92, and the lower rolling element 116 axially between the upper channel 78 of the bearing plate 72 and the base channel 50 in the base plate 38. In addition, a second function of the bearing plate 72 is to provide peel strength against load (arrow D) through the swivel plate 92. More specifically, the bearing plate 72 includes the J-shaped channel 80 which serves as a continuous "J-Hook" to provide peel strength against load (arrow D) through the swivel plate 92. The material thickness of the J-shaped channel 80 may be reduced in comparison to the material thickness of conventional "4 comer" J-Hooks included in certain known swivel mechanisms since the J-shaped channel 80 provides 360° coverage around the swivel plate 92.

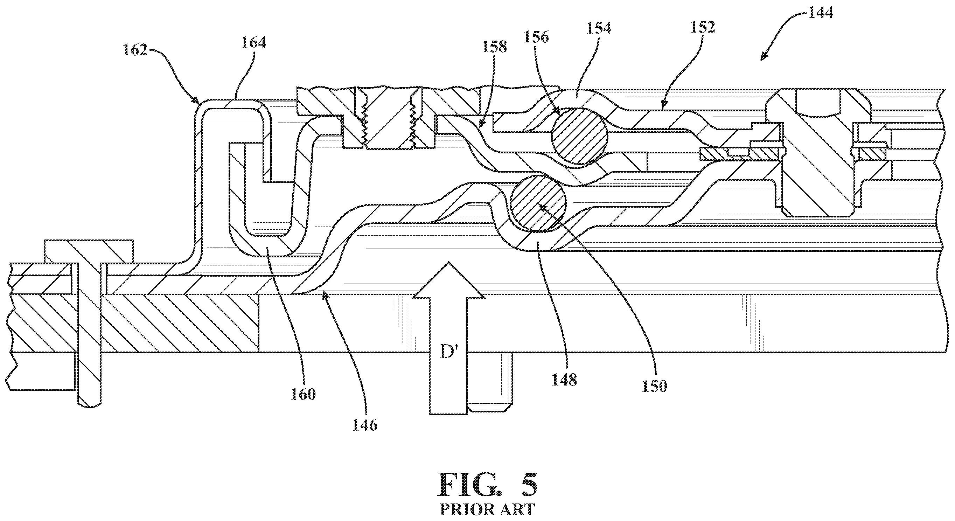

In comparison, an exemplary known swivel mechanism 144 is shown in Figure 5 wherein the first function of supporting the rolling elements and the second function of providing peel strength against load (arrow D) are performed by separate components instead of the dual function bearing plate 72 of the present invention. The known swivel mechanism 144 comprises a base plate 146 having a lower channel 148, a lower rolling element 150 positioned within the lower channel 148, an upper plate 152 fixedly coupled to the base plate 146 and having an upper channel 154, and an upper rolling element 156 positioned within the upper channel 154. The known swivel mechanism 144 also includes a swivel plate 158 spaced axially between the base plate 146 and the upper plate 152 and extending between the lower and upper rolling elements 150, 156 such that the swivel plate 158 is pivotably coupled to the base plate 146 and the upper plate 152. Thus, the first function of supporting and containing the lower and upper rolling elements 150, 156 is performed by the upper plate 152 in the known swivel mechanism 144.

The known swivel plate 158 also includes an upward facing U-shaped channel 160 extending circumferentially around an outer perimeter of the swivel plate 158. Alternatively, the U-shaped channel 160 may be replaced by J-Hooks (not shown) fixedly coupled to the swivel plate 158, as is commonly known in the art. The known swivel mechanism 144 also includes J-Hooks 162 riveted to the base plate 146 at four places spaced around an outer perimeter of the swivel plate 158, commonly described as "4 comer" J-Hooks 162. The J-hook 162 includes an inverted J-shaped hook portion 164 configured to interlock with the upward facing U-shaped channel 160 of the swivel plate 158. The J-Hooks 162 provide local reinforcement for the known swivel mechanism 144 to improve the load-carrying capability of the known swivel mechanism 144. Thus, the second function of providing peel strength against load (arrow D') is performed by the J-Hooks 162 in the known swivel mechanism 144.

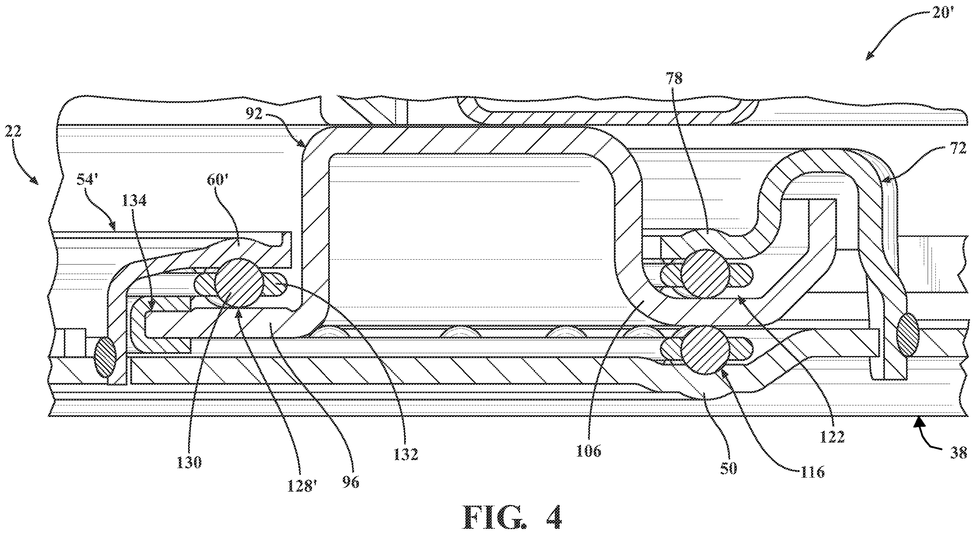

A second embodiment of the swivel mechanism 20' is shown in Figure 4, where like primed reference numerals represent similar elements as those described above. The second embodiment shown in Figure 4 depicts a central rolling element 128' in place of the sliding element 128 shown in Figure 3. Only significant differences between the two embodiments are reflected in the Figures and the description below. The central rolling element 128' includes a plurality of spaced apart rollers 130 supported within a cage 132. In addition, the second embodiment includes a retaining ring 54' having a modified ring portion 60' having a lower surface configured as an upper race for the central rolling element 128'. It will be appreciated that the central rolling element 128' may be replaced by the central sliding element 128, a ball bearing, a cylindrical bearing, a needle bearing, and the like, without altering the scope of the present invention.

As discussed above, the seat assembly 10 of the present invention includes a swivel mechanism 20, 20' comprising a dual function bearing plate 72 and a retaining ring 54 fixedly coupled to a base plate 38. Further, the swivel mechanism 20, 20' includes rolling and/or sliding elements 116, 122, 128, 128' pivotally coupling a swivel plate 92 to the bearing plate 72, the retaining ring 54, and the base plate 38. The bearing plate 72 performs a first function of supporting and containing the rolling elements 116, 122 against the base plate 38. In addition, the bearing plate 72 performs a second function of providing peel strength against load (arrow D) through the swivel plate 92. The retaining ring 54 and the bearing plate 72 are configured to reduce assembly costs of the swivel mechanism 20, 20' and reduce looseness with the rolling and/or sliding elements 116, 122, 128, 128' in the axial direction. In addition, the material thickness of the bearing plate 72 may be reduced in comparison to the typical material thickness of the known J-Hooks while providing sufficient peel strength in the axial direction since the bearing plate 72 circumferentially surrounds the swivel plate 92.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A swivel mechanism (20) for use in a seat assembly (10) for an automotive vehicle, the swivel mechanism (20) comprising:
a base plate (38);
a swivel plate (92) pivotally coupled to the base plate (38) and including an inner flange (96) extending in a circumferential direction around a central aperture (94) extending through the swivel plate (92), an outer ring (106) extending in the circumferential direction and spaced radially outward from the inner flange (96), and an outer flange (108) extending upward from the outer ring (106);
a retaining ring (54) including a ring portion (60) extending in the circumferential direction and a leg portion (66) projecting downward from the ring portion (60) through the central aperture (94) in the swivel plate (92) and fixedly coupled to the base plate (38) with the inner flange (96) spaced axially between the ring portion (60) and the base plate (38); and
a bearing plate (72) including an upper channel (78) extending in the circumferential direction and a J-shaped channel (80) extending in the circumferential direction and spaced radially outward of the upper channel (78), the J-shaped channel (80) comprising an inner side (82) projecting axially upward from the upper channel (78), an outer side (84) projecting axially downward and spaced radially outward from the inner side (82), and a radial portion (86) extending radially between the inner side (82) and the outer side (84) with the outer side (84) fixedly coupled to the base plate (38),
wherein the outer ring (106) is spaced axially between the upper channel (78) and the base plate (38), and the outer flange (108) is spaced radially between the inner side (82) and the outer side (84) and spaced axially between the radial portion (86) and the base plate (38),
and wherein the upper channel (78) extends circumferentially around a center opening (76) extending axially through the bearing plate (72); and the J-shaped channel (80) extends circumferentially around the bearing plate (72).

2. The swivel mechanism (20) as set forth in claim 1, further comprising:
an upper rolling element (122) or an upper sliding element pivotally coupling the upper channel (78) of the bearing plate (72) and the outer ring (106) of the swivel plate (92).

3. The swivel mechanism (20) as set forth in claim 2, further comprising:
a lower rolling element (116) or a lower sliding element pivotally coupling the outer ring (106) of the swivel plate (92) and the base plate (38).

4. The swivel mechanism (20) as set forth in claim 3, further comprising:
a central rolling element (128') or a central sliding element pivotally coupling the ring portion (60) of the retaining ring (54) and the base plate (38).

5. The swivel mechanism (20) as set forth in claim 4, further comprising:
a flange sliding element (134) fixedly coupled to the inner flange (96) of the swivel plate (92).

6. The swivel mechanism (20) as set forth in claim 1, further comprising:
an upper rolling element (122) pivotally coupling the upper channel (78) of the bearing plate (72) and the outer ring (106) of the swivel plate (92);
a lower rolling element (116) pivotally coupling the outer ring (106) of the swivel plate (92) and the base plate (38); and
a central rolling element (128') pivotally coupling the ring portion (60) of the retaining ring (54) and the base plate (38); wherein the swivel plate (92) is pivotally coupled to the bearing plate (72), the base plate (38), and the retaining ring (54) by the upper rolling element (122), the lower rolling element (116), and the central rolling element (128'), respectively.

7. The swivel mechanism (20) as set forth in claim 1, wherein:
the center opening (76) has a diameter greater than an outer diameter of the retaining ring (54).

8. The swivel mechanism (20) as set forth in claim 1, further comprising:
a tubular frame (24) fixedly coupled to the swivel plate (92).

9. A seat assembly (10) for an automotive vehicle, the seat assembly (10) comprising:
a seat cushion (12);
a seat base (15); and
a swivel mechanism (20) according to any one of claims 1 to 8 pivotally coupling the seat cushion (12) to the seat base (15),
wherein
the base plate (38) is fixedly coupled to the seat base (15); and
the swivel plate (92) is fixedly coupled to a tubular frame (24).

10. The seat assembly (10) as set forth in claim 9, wherein the tubular frame (24) is fixedly coupled to the seat cushion (12).

11. The seat assembly (10) as set forth in claim 10, further comprising:
a plurality of shoulder bolts (110) fixedly coupling the swivel plate (92) to the tubular frame (24).

12. The seat assembly (10) as set forth in claim 11, wherein:
the base plate (38) includes a plurality of spaced apart inner slots (48); and
the retaining ring (54) includes a plurality of spaced apart inner tabs (68) inserted into respective inner slots (48) in the base plate (38).

13. The seat assembly (10) as set forth in claim 12, wherein:
the base plate (38) includes a plurality of spaced apart outer slots (52); and
the bearing plate (72) includes a plurality of spaced apart outer tabs (88) inserted into respective outer slots (52) in the base plate (38).

14. The seat assembly (10) as set forth in claim 9, wherein:
the seat base (15) comprises a pair of laterally spaced apart riser brackets (18).

## Patentansprüche

1. Schwenkmechanismus (20) zur Verwendung in einer Sitzanordnung (10) für ein Kraftfahrzeug, wobei der Schwenkmechanismus (20) aufweist:
eine Basisplatte (38);
eine Schwenkplatte (92), die schwenkbar mit der Basisplatte (38) verbunden ist und einen inneren Flansch (96), der sich in einer Umfangsrichtung um eine sich durch die Schwenkplatte (92) erstreckende zentrale Öffnung (94) herum erstreckt, einen äußeren Ring (106), der sich in der Umfangsrichtung erstreckt und radial nach außen von dem inneren Flansch (96) beabstandet ist, und einen äußeren Flansch (108), der sich ausgehend von dem äußeren Ring (106) nach oben erstreckt, aufweist;
einen Haltering (54), der einen sich in der Umfangsrichtung erstreckenden Ringabschnitt (60) und einen ausgehend von dem Ringabschnitt (60) nach unten durch die zentrale Öffnung (94) in der Schwenkplatte (92) ragenden und fest mit der Basisplatte (38) gekoppelten Schenkelabschnitt (66) aufweist, wobei der innere Flansch (96) axial zwischen dem Ringabschnitt (60) und der Basisplatte (38) beabstandet ist; und
eine Lagerplatte (72), die einen sich in der Umfangsrichtung erstreckenden oberen Kanal (78) und einen sich in der Umfangsrichtung erstreckenden und radial nach außen von dem oberen Kanal (78) beabstandeten J-förmigen Kanal (80) aufweist, wobei der J-förmige Kanal (80) eine Innenseite (82), die ausgehend von dem oberen Kanal (78) axial nach oben ragt, eine Außenseite (84), die ausgehend von der Innenseite (82) axial nach unten ragt und von dieser radial nach außen beabstandet ist, und einen radialen Abschnitt (86), der sich radial zwischen der Innenseite (82) und der Außenseite (84) erstreckt, wobei die Außenseite (84) fest mit der Basisplatte (38) gekoppelt ist,
wobei der äußere Ring (106) axial zwischen dem oberen Kanal (78) und der Basisplatte (38) beabstandet ist, und der äußere Flansch (108) radial zwischen der Innenseite (82) und der Außenseite (84) beabstandet ist und axial zwischen dem radialen Abschnitt (86) und der Basisplatte (38) beabstandet ist,
und wobei sich der obere Kanal (78) in Umfangsrichtung um eine zentrale Öffnung (76) herum erstreckt, die sich axial durch die Lagerplatte (72) hindurch erstreckt; und der J-förmige Kanal (80) sich in Umfangsrichtung um die Lagerplatte (72) herum erstreckt.

2. Schwenkmechanismus (20) nach Anspruch 1, des Weiteren aufweisend:
ein oberes Rollenelement (122) oder ein oberes Gleitelement, das den oberen Kanal (78) der Lagerplatte (72) und den äußeren Ring (106) der Schwenkplatte (92) schwenkbar miteinander koppelt.

3. Schwenkmechanismus (20) nach Anspruch 2, des Weiteren aufweisend:
ein unteres Rollenelement (116) oder ein unteres Gleitelement, das den äußeren Ring (106) der Schwenkplatte (92) und die Basisplatte (38) schwenkbar miteinander koppelt.

4. Schwenkmechanismus (20) nach Anspruch 3, des Weiteren aufweisend:
ein zentrales Rollenelement (128') oder ein zentrales Gleitelement, das den Ringabschnitt (60) des Halterings (54) und die Basisplatte (38) schwenkbar miteinander koppelt.

5. Schwenkmechanismus (20) nach Anspruch 4, des Weiteren aufweisend:
ein Flanschgleitelement (134), das fest mit dem inneren Flansch (96) der Schwenkplatte (92) gekoppelt ist.

6. Schwenkmechanismus (20) nach Anspruch 1, des Weiteren aufweisend:
ein oberes Rollenelement (122), das den oberen Kanal (78) der Lagerplatte (72) und den äußeren Ring (106) der Schwenkplatte (92) schwenkbar miteinander koppelt;
ein unteres Rollenelement (116), das den äußeren Ring (106) der Schwenkplatte (92) und die Basisplatte (38) schwenkbar miteinander koppelt; und
ein zentrales Rollenelement (128'), das den Ringabschnitt (60) des Halterings (54) und die Basisplatte (38) schwenkbar miteinander koppelt; wobei die Schwenkplatte (92) durch das obere Rollenelement (122), das untere Rollenelement (116) bzw. das zentrale Rollenelement (128') schwenkbar mit der Lagerplatte (72), der Basisplatte (38) und dem Haltering (54) gekoppelt ist.

7. Schwenkmechanismus (20) nach Anspruch 1, wobei:
die zentrale Öffnung (76) einen Durchmesser aufweist, der größer ist als ein Außendurchmesser des Halterings (54).

8. Schwenkmechanismus (20) nach Anspruch 1, des Weiteren aufweisend einen rohrförmigen Rahmen (24), der fest mit der Schwenkplatte (92) gekoppelt ist.

9. Sitzanordnung (10) für ein Kraftfahrzeug, wobei die Sitzanordnung (10) aufweist:
ein Sitzkissen (12);
eine Sitzbasis (15); und
einen Schwenkmechanismus (20) nach einem der Ansprüche 1 bis 8, der das Sitzkissen (12) schwenkbar mit der Sitzbasis (15) koppelt,
wobei
die Basisplatte (38) fest mit der Sitzbasis (15) gekoppelt ist; und
die Schwenkplatte (92) fest mit einem rohrförmigen Rahmen (24) gekoppelt ist.

10. Sitzanordnung (10) nach Anspruch 9, wobei der rohrförmige Rahmen (24) fest mit dem Sitzkissen (12) gekoppelt ist.

11. Sitzanordnung (10) nach Anspruch 10, des Weiteren aufweisend:
eine Mehrzahl von Schulterbolzen (110), die die Schwenkplatte (92) fest mit dem rohrförmigen Rahmen (24) koppeln.

12. Sitzanordnung (10) nach Anspruch 11, wobei:
die Basisplatte (38) eine Mehrzahl von voneinander beabstandeten inneren Schlitzen (48) aufweist; und
der Haltering (54) eine Mehrzahl von voneinander beabstandeten inneren Vorsprüngen (68) aufweist, die in jeweilige innere Schlitze (48) in der Basisplatte (38) eingesetzt sind.

13. Sitzanordnung (10) nach Anspruch 12, wobei:
die Basisplatte (38) eine Mehrzahl von voneinander beabstandeten äußeren Schlitzen (52) aufweist; und
die Lagerplatte (72) eine Vielzahl von voneinander beabstandeten äußeren Vorsprüngen (88) aufweist, die in jeweilige äußere Schlitze (52) in der Basisplatte (38) eingesetzt sind.

14. Sitzanordnung (10) nach Anspruch 9, wobei:
die Sitzbasis (15) ein Paar von seitlich beabstandeten Heber-Halterungen (18) aufweist.

## Revendications

1. Mécanisme de pivotement (20) destiné à être utilisé dans un assemblage de siège (10) pour un véhicule automobile, le mécanisme de pivotement (20) comprenant :
une plaque de base (38) ;
une plaque de pivotement (92) couplée de manière pivotante à la plaque de base (38) et incluant une bride intérieure (96) s'étendant le long d'une direction circonférentielle autour d'une ouverture centrale (94) s'étendant à travers la plaque de pivotement (92), un anneau extérieur (106) s'étendant dans la direction circonférentielle et espacé radialement à l'extérieur de la bride intérieure (96), et une bride extérieure (108) s'étendant vers le haut depuis l'anneau extérieur (106) ;
un anneau de retenue (54) incluant une portion anneau (60) s'étendant dans la direction circonférentielle et une portion jambe (66) en projection vers le bas depuis la portion anneau (60) à travers l'ouverture centrale (94) dans la plaque de pivotement (92) et couplé de manière fixe à la plaque de base (38), la bride intérieure (96) étant espacée axialement entre la portion formant anneau (60) et la plaque de base (38) ; et
une plaque de palier (72) incluant un canal supérieur (78) s'étendant dans la direction circonférentielle et un canal en forme de J (80) s'étendant dans la direction circonférentielle et espacé radialement à l'extérieur du canal supérieur (78), le canal en forme de J (80) comprenant un côté intérieur (82) en projection axiale vers le haut depuis le canal supérieur (78), un côté extérieur (84) en projection axiale vers le bas et espacé radialement à l'extérieur du côté intérieur (82), et une portion radiale (86) s'étendant radialement entre le côté intérieur (82) et le côté extérieur (84), le côté extérieur (84) étant couplé de manière fixe à la plaque de base (38),
dans lequel l'anneau extérieur (106) est espacé radialement entre le canal supérieur (78) et la plaque de base (38), et la bride extérieure (108) est espacée radialement entre le côté intérieur (82) et le côté extérieur (84) et espacée axialement entre la portion radiale (86) et la plaque de base (38),
et dans lequel le canal supérieur (78) s'étend circonférentiellement autour d'une ouverture centrale (76) s'étendant axialement à travers la plaque de palier (72) ; et le canal en forme de J (80) s'étend circonférentiellement autour de la plaque de palier (72).

2. Mécanisme de pivotement (20) selon la revendication 1, comprenant en outre :
un élément de roulement supérieur (122) ou un élément de coulissement supérieur couplant de manière pivotante le canal supérieur (78) de la plaque de palier (72) et l'anneau extérieur (106) de la plaque de pivotement (92).

3. Mécanisme de pivotement (20) selon la revendication 2, comprenant en outre :
un élément de roulement inférieur (116) ou un élément de coulissement inférieur couplant de manière pivotante l'anneau extérieur (106) de la plaque de pivotement (92) et la plaque de base (38).

4. Mécanisme de pivotement (20) selon la revendication 3, comprenant en outre :
un élément de roulement central (128') ou un élément de coulissement central couplant de manière pivotante la portion anneau (60) de l'anneau de retenue (54) et la plaque de base (38).

5. Mécanisme de pivotement (20) selon la revendication 4, comprenant en outre :
un élément de coulissement de bride (134) couplé de manière fixe à la bride intérieure (96) de la plaque de pivotement (92).

6. Mécanisme de pivotement (20) selon la revendication 1, comprenant en outre :
un élément de roulement supérieur (122) couplant de manière pivotante le canal supérieur (78) de la plaque de palier (72) et l'anneau extérieur (106) de la plaque de pivotement (92) ;
un élément de roulement inférieur (116) couplant de manière pivotante l'anneau extérieur (106) de la plaque de pivotement (92) et la plaque de base (38) ; et
un élément de roulement central (128') couplant de manière pivotante la portion anneau (60) de l'anneau de retenue (54) et la plaque de base (38) ;
dans lequel la plaque de pivotement (92) est couplée de manière pivotante à la plaque de palier (72), à la plaque de base (38) et à l'anneau de retenue (54) par l'intermédiaire de l'élément de roulement supérieur (122), de l'élément de roulement inférieur (116), et de l'élément de roulement central (128'), respectivement.

7. Mécanisme de pivotement (20) selon la revendication 1, dans lequel :
l'ouverture centrale (76) a un diamètre supérieur à un diamètre extérieur de l'anneau de retenue (54).

8. Mécanisme de pivotement (20) selon la revendication 1, comprenant en outre :
un châssis tubulaire (24) couplé de manière fixe à la plaque de pivotement (92).

9. Assemblage de siège (10) pour un véhicule automobile, l'assemblage de siège (10) comprenant :
un coussin de siège (12) ;
une base de siège (15) ; et
un mécanisme de pivotement (20) selon l'une quelconque des revendications 1 à 8 couplant de manière pivotante le coussin de siège (12) à la base de siège (15),
dans lequel
la plaque de base (38) est couplée de manière fixe à la base de siège (15) ; et
la plaque de pivotement (92) est couplée de manière fixe à un châssis tubulaire (24).

10. Assemblage de siège (10) selon la revendication 9, dans lequel le châssis tubulaire (24) est couplé de manière fixe au coussin de siège (12).

11. Assemblage de siège (10) selon la revendication 10, comprenant en outre :
une pluralité de boulons d'épaulement (110) couplant de manière fixe la plaque de pivotement (92) au châssis tubulaire (24).

12. Assemblage de siège (10) selon la revendication 11, dans lequel :
la plaque de base (38) inclut une pluralité de fentes intérieures espacées (48) ; et
l'anneau de retenue (54) inclut une pluralité de pattes intérieures espacées (68) insérées dans des fentes intérieures respectives (48) dans la plaque de base (38).

13. Assemblage de siège (10) selon la revendication 12, dans lequel :
la plaque de base (38) inclut une pluralité de fentes extérieures espacées (52) ; et
la plaque de palier (72) inclut une pluralité de pattes extérieures espacées (88) insérées dans des fentes extérieures respectives (52) dans la plaque de base (38).

14. Assemblage de siège (10) selon la revendication 9, dans lequel :
la base de siège (15) comprend une paire de supports de rehausse espacés latéralement (18).
